# EUROPEAN PATENT APPLICATION

(11) **EP 2 127 531 A1**
(43) Date of publication of application: **02.12.2009**
(21) Application number: 07730369.1
(22) Date of filing: 09.03.2007
(51) Int. Cl.: A23C 9/152, C12G 3/04, A23L 1/054

(54) **FOOD ADDITIVE**

(30) Priority: 07.03.2007 ES 200700599
(71) Applicant: Premium Ingredients, S.l., 30169 San Gines (Murcia) (ES)
(72) Inventor: STAMM KRISTENSEN, Henrik, 30169 SAN GINES(MURCIA) (ES); NAVARRO PEREZ, José, 30169 SAN GINES(MURCIA) (ES)
(74) Representative: Temino Ceniceros, Ignacio
(86) International application number: PCT/ES2007/000128
(87) International publication number: WO 2008/107496

(57) **Abstract**

The invention relates to a dairy product containing alcohol. A combination of native gellan gum and sodium stearoyl-2-lactylate is used as an emulsifier and stabiliser in the preparation of said product. The invention also relates to a method for preparing said dairy product containing alcohol.

## Description

The invention is part of the food sector and relates to a food additive with emulsifying and/or stabilizing properties that includes sodium stearoyl-2-lactylic (SSL) as an emulsifying agent and Native Gellan Gum or High Acyl Gellan Gum as a stabilizing agent.

### PRIOR STATE OF THE ART

Stabilization is a known problem in the preparation of dairy food products containing alcohol, which is generally resolved by adding a stabilizing agent, preferably sodium caseinate or other lactic proteins.

Frequently, stabilization in preparation is achieved by selecting appropriate emulsifiers, antioxidants, thickeners and stabilizers or by the proper selection of these ingredients using a special preparation process. For example, it is known that in a dairy product, the fat is stabilized to obtain a more homogenous and stable emulsion through the milk proteins, which are immediately dispersed in colloidal way and micellar form.

Patent request EP 1078981 describes the preparation of an alcoholic cream that incorporates a fluid gelling agent, which is present in quantities between 0.05% and 2% and can be low acyl gellan gum. It also mentions as an additional characteristic that the presence of said gelling agent causes the fat to be encapsulated in the alcoholic cream gel matrix, which grants it specific properties that allow said alcoholic cream to float in cold as well as hot beverages. The examples described in the above mentioned request describe the use of SSL, low acyl gellan gum and lactic proteins, except in one of them where the lactic proteins are not added with the result of said compound being unstable. This request indicates that when the content of gellan gum used is below 0.16%, the alcoholic cream does not achieve sufficient stabilization when it is poured over the hot beverage.

In patent request WO 06/079664, serum protein is used along with a stabilizer (polysaccharide) and an emulsifier (polysorbate, ester polyglycol, sugar ester) to stabilize cream liquor.

The British patent request GB 2 084 185 describes the preparation of cream liquors as comprised of cream, sugar alcohol, sodium caseinate, flavoring and coloring agents, and includes the addition of citrates to improve its stability.

The Spanish patent request P-200700192/6 by the same inventors as the present request, describes a food additive containing SSL and native gellan gum for the preparation of an earth almond milk drink that is free of lactic proteins.

Therefore, it would be convenient to have a food additive available for preparing a dairy product containing alcohol that does not require the use of lactic proteins.

### DESCRIPTION OF THE INVENTION

The inventors have found that, surprisingly, the mixing of sodium stearoyl-2-lactylic (SSL) and high acyl gellan gum enables to prepare a dairy product containing alcohol without the lactic protein additive, with mixture emulsion and stabilizing properties resulting in a fluid liquor without phase separation (fat / alcoholic-aqueous phase)

The emulsion obtained is stable and less expensive than the one obtained with sodium caseinate or other lactic proteins.

Therefore, according to one aspect of this invention, it provides the use of a food additive with emulsifying and/or stabilizing properties, which includes SSL and high acyl gellan gum in the preparation of a dairy product containing alcohol that is free of lactic proteins.

Gellan gum is a multifunctional polysaccharide that can potentially be used in a wide variety of products as a gelifier, texturizer and stabilizer. It has the particularity of gelifying at lower concentrations than other polysaccharides due to the formation and adding of helixes induced by mono and divalent cations. The texture properties of its gels are affected by the concentration and type of cations, the presence of sequestering agent and the pH.

Two types of gellan gum with different molecular structure exist:
- Native Gellan Gum or High Acyl Gellan Gum with two acyl substitutes, both located in the same glucose.

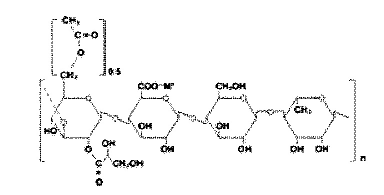

Both acyl groups (acetate and glycerate) do not prevent gel formation but interfere by forming gels with greater elasticity.
- Low Acyl Gellan Gum, more reactive to ions (potassium, calcium) forming helical shaped additives with gels that are firmer and more fragile.

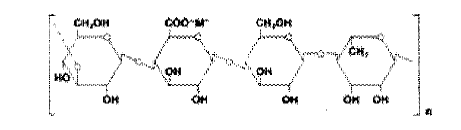

The low acyl gellan gum is the form used for food applications.

Native gellan gum is a commercial product produced or supplied by several companies, for example, CP - Kelco (USA).

Sodium stearoyl-2-lactylic (SSL), with formula 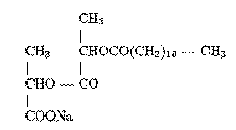 is a highly absorbent emulsifier. SSL is a product obtained through the esterification reaction between a sodium salt neutralized lactic acid and a stearic acid dimer. The commercial product is produced or supplied by several companies, for example, Palsgaard (Denmark). It is used for baking cakes, pastries, cookies and bread.

According to one embodiment of this invention, the quantity of native gellan gum used is between 0.005 - 0.040 % in weight with respect to the entire dairy product (cream liquor). Preferably between 0.010 - 0,030% and ideally 0.025%.

According to one embodiment of this invention, the quantity of SSL used is between 0.025-1% in weight with respect to the entire dairy product (cream liquor). Preferably between 0.30 - 0.70% and ideally between 0.40-0.60%.

If desired, the emulsifier capability of the invention's additive can be increased by replacing a part of the SSL with one or more sucrose esters (fatty acids and sucrose mono or polyesters). Sucrose esters are non ionic emulsifiers of wide spectrum application, in which the fatty acid alkyl chain constitutes the apolar fraction of the molecule while the sucrose, in virtue of the polarity granted by the hydroxyl groups that remain non reactive, constitutes the hydrophilic fraction, so depending on the number of esterified hydroxyls and the length and nature of the corresponding fatty acid chains, sucrose esters with very diverse HLB are obtained. In this invention, said sucrose esters have a boosting effect upon the native gellan gum and SSL mixture regarding emulsifying properties and displacement of the hydrophile-lypophile balance. Non-limiting and illustrative examples of sucrose-esters that can be used in this invention include sucrose stearate, sucrose plamitate, sucrose oleate, etc. Preferably, the sucrose ester used is sucrose stearate. In case the additive of this invention includes one or more sucrose esters, the total amount of sucrose ester(s) that may be present in the additive of this invention may vary within a wide interval, depending on the degree of boosting and refinement of the emulsifying effect desired to be applied to the native gellum gum and SSL mixture; however, in a particular embodiment, the amount of sucrose ester used is within 0.05-0.25% in weight with respect to the entire dairy product (cream liquor). Preferably between 0.08 - 1.25% and ideally 0.1%.

In a preferred embodiment of this invention, the additive also includes a sucrose ester as an additional emulsifier, preferably sucrose stearate and a carrageenan as an additional stabilizer, preferably iota carrageenan.

According with the information provided, the invention compositions contain a fat content between 2-15%, preferably between 4-14%, ideally between 8-12%.

The invention's additive is preferably applied during the aqueous phase in order to subsequently mix the alcohol phase and cream. The mixture is homogenized while hot and immediately cooled. With this process, the emulsion obtained is stable and less expensive than the one obtained with sodium caseinate or other lactic proteins.

The dairy product containing alcohol, in which the invention's additive is applied during preparation, is preferably liquor with an alcohol content of 17-20%, fat 8-12%, sugar 15-20% and water 50-60%. The liquor must be maintained stable at temperatures below 40 °C and can be mixed with ice and hot beverages in which it does not float.

The preparation process for the dairy product containing alcohol is based on mixing cream, alcohol or whisky, water, sugar and the SSL/native gellan gum mixture with stabilizing/ emulsifying properties at a temperature of about 60 - 70 °C. Afterwards, it is homogenized at 250 - 350 kg. of pressure and it is immediately cooled at 10-15 °C.

In the context of this invention, the term "dairy product containing alcohol" must be understood as a product that includes a dairy product (milk, cream, etc.) and alcohol or a liquid product that contains alcohol. The terms "alcoholic dairy product" and "dairy product containing alcohol" are used indistinctively in this invention to refer to the product of this invention, which contains a dairy product, for example cream and alcohol or a liquid product that contains alcohol, for example whisky.

Preferably, the dairy product used is milk or cream.

Throughout the description and claims, the word "encompasses" and its synonyms do not intend to exclude other technical characteristics, additions, components or steps.

For the experts in the field, other objectives, advantages and characteristics of this invention will in part be derived from the description and in part from placing the invention into practice. The following examples provide an illustration and are not intended to limit this invention.

### DETAILED DESCRIPTION OF THE APPLICATION METHODS

### Example 1.

| | |
|---|---|
| 35% fat cream | 28.5 % |
| Whisky | 42.5 % |
| Sugar | 20 % |
| Deionized water | 8.475 % |
| SSL | 0.5 % |
| Native gellan gum | 0.025 % |

### Example No.2.

| | |
|---|---|
| 35% fat cream | 28.5 % |
| Whisky | 42.5 % |
| Sugar | 20 % |
| Deionized water | 8.39 % |
| SSL | 0.45 % |
| Sucrose stearate (sucroester) | 0.10 % |
| lota carrageenan | 0.035 % |
| Native gellan gum | 0.025 % |

### Process examples 1 and 2:

The additive was dispersed in water at 75 °C and subsequently, cream was added and mixed at 75 °C. Once the cream was well mixed, whisky was added to the mixture and finally, after adding the sugar, it was homogenized in 2 stages: The first stage at 300 Kg. of pressure and the second at 50 Kg. It was cooled at 10 -15 °C.

### Example NO.3

| | |
|---|---|
| 35% fat cream | 28.5 % |
| Whisky | 42.5 % |
| Sugar | 20 % |
| Deionized water | 8.47 % |
| SSL | 0.5 % |
| Low acyl gellan gum | 0.025 % |

### Example No.4

| | |
|---|---|
| 35% fat cream | 28.5 % |
| Whisky | 42.5 % |
| Sugar | 20 % |
| Deionized water | 8.45 % |
| SSL | 0.5 % |
| Low acyl gellan gum | 0.05 % |

### Example No.5

| | |
|---|---|
| 35% fat cream | 28.5 % |
| Whisky | 42.5 % |
| Sugar | 20 % |
| Deionized water | 8.35 % |
| SSL | 0.5 % |
| Low acyl gellan gum | 0.15 % |

### Process examples 3, 4 and 5:

The low acyl gellan gum was dispersed in water at room temperature and it was heated to 80°C in order to make soluble. If the deionization level of the water is not low enough, a sequestering agent, such as trisodium citrate in 0.1 % doses, must be added in order to prevent the pre-gelification of the low acyl Gellan gum, which is very sensitive to ions. Afterwards, the cream was added at 72 °C and after it was well mixed, Whisky was added to the mixture. Finally, sugar was added and it was homogenized in 2 stages: The first stage at 300 Kg. of pressure and the second at 50 Kg. It was left to cool at 10 - 15 °C.

The products obtained were subjected to a stability test for 6 weeks at 40 °C.

### Results:

Examples 1 and 2 were maintained homogenous with a slight difference in viscosity between the two. They were considered stable. On the other hand, examples 3, 4 and 5 presented flocculations on the surface, and these were considered unstable.

## Claims

1. A dairy product containing alcohol that incorporates a dairy product, alcohol or a liquid product containing alcohol, **characterized in that** a combination of native gellan gum and sodium stearoyl-2-lactylic is used as an emulsifying agent and stabilizer.

2. The dairy product in accordance with claim 1, **characterized in that** the product does not contain any lactic proteins.

3. The product in accordance with any of the prior claims 1-2, **characterized in that** the quantity of native gellan gum used is between 0.005 - 0.040 % in weight with respect to the entire dairy product containing alcohol.

4. The product in accordance with prior claim 3, **characterized in that** the quantity of native gellan gum is between 0.010 - 0.030%.

5. The product in accordance with any of the prior claims, **characterized in that** the quantity of sodium stearoyl-2-lactylic used is between 0.025 - 1 % in weight with respect to the entire dairy product containing alcohol.

6. The product in accordance with prior claim 5, **characterized in that** the quantity of sodium stearoyl-2- lactylic is between 0.30 - 0.70%.

7. The product in accordance with any of the prior claims 1-6, **characterized in that** it contains 0.025% of native gellan gum in weight with respect to the entire dairy product containing alcohol and between 0.40-0.60% in weight with respect to the entire sodium stearoyl-2-lactylic dairy product containing alcohol.

8. The product in accordance with any of the prior claims 1-7, **characterized in that** it additionally contains a sucrose ester.

9. The product in accordance with prior claim 8, **characterized in that** the sucrose ester is selected from a group formed by sucrose stearate, sucrose palmitate and sucrose oleate.

10. The product in accordance with any of the prior claims 8-9, ]**characterized in that** the sucrose ester used is sucrose stearate.

11. The product in accordance with any of the prior claims 8-10, **characterized in that** the quantity of sucrose ester used is between 0.05 - 0.25% in weight with respect to the entire dairy product containing alcohol.

12. The product in accordance with any of the prior claims 1-11, **characterized in that** it additionally contains a carrageenan.

13. The product in accordance with claim 12, **characterized in that** the carrageenan is iota carrageenan.

14. The product in accordance with any of the prior claims 1-13, **characterized in that** the fat content is between 2 and 15%.

15. The product in accordance with prior claim 14, **characterized in that** the fat content is between 4 and 14%.

16. The product in accordance with prior claim 15, **characterized in that** the fat content is between 8 and 12%.

17. The product in accordance with any of the prior claims 1-16, **characterized in that** it has alcohol content between 17 and 20%, 8-12 % fat, 15-20 % sugar and 50-60% water.

18. The use of a food additive with emulsifying and/or stabilizing properties, which includes sodium stearoyl-2-lactylic and native gellan gum in the preparation of a dairy product containing alcohol that is free of lactic proteins in accordance with any of claims 1-17.

19. The use of a food additive with emulsifying and/or stabilizing properties, which includes sodium stearoyl-2-lactylic, native gellan gum, a sucrose ester and iota carrogeenan in the preparation of a dairy product containing alcohol that is free of lactic proteins in accordance with any of claims 1-17.

20. A preparation procedure for a dairy product containing alcohol in accordance with any of claims 1-17, **characterized in that** it includes the following stages:
- mixture of sodium stearoyl-2-lactylic, native gellan gum and the option of including the sucrose ester and the iota carrogeenan with water;
- addition of the rest of components;
- hot homogenization; and
- cooling of the resulting product.
